# EUROPÄISCHE PATENTANMELDUNG

(11) **EP 4 109 693 A1**
(43) Veröffentlichungstag der Anmeldung: **28.12.2022**
(21) Anmeldenummer: 22180042.8
(22) Anmeldetag: 21.06.2022
(51) Int. Cl.: H02G 3/12, F16B 2/04, H01R 13/73

(54) **INSTALLATIONSDOSE MIT BEFESTIGUNGSKLAMMERN ZUM EINHAKEN IN HOLZWÄNDE**

(30) Priorität: 23.06.2021 DE 202021103363 U
(71) Anmelder: f-tronic GmbH, 66131 Saarbrücken (DE)
(72) Erfinder: Fohs, Peter, 66399 Mandelbachtal (DE)
(74) Vertreter: Keil & Schaafhausen Patentanwälte PartGmbB

(57) **Zusammenfassung**

Die Erfindung betrifft eine Installationsdose (1) für die Elektroinstallation mit einer Öffnung, einem den Öffnungsrand umgebenden Anlageflansch (9), einer Seitenwandkonstruktion (10), die an dem Öffnungsrand anliegt, und mit einem Bodenbereich, der sich an der dem Öffnungsrand gegenüberliegenden Kante der Seitenwandkonstruktion (10) anschließt und die Installationsdose an der Öffnung gegenüberliegenden Seite abschließt. Die Installationsdose (1) weist zwei sich in der Seitenwandkonstruktion erstreckende Kanäle (7) sowie eine Schraubenanordnung (4, 5) mit in Längsrichtung der Kanäle (7) geführten Schrauben (5) und diesen zugeordneten Muttern (4) auf. Zusätzlich ist die Installationsdose (1) mit der Schraubenanordnung (4, 5) zugeordneten Halteelementen (3) versehen, die aus der ersten Stellung heraus in eine Montagestellung überführbar sind, in der die Halteelemente (3) aus den Kanälen (7) heraus überstehen. Die Halteelemente (3) weisen eine Schneidkante und/oder eine oder mehrere Schneidspitzen (301; 508, 509) auf. Der Übergang der Halteelemente (3) aus der ersten Stellung in die Montagestellung erfolgt derart, dass der Drehwinkel des Halteelementes (3) über den gesamten Weg der Bewegung der Mutter (4) in dem Kanal (7) kontinuierlich abhängig ist von der Position der Mutter (4) in der Längsrichtung des jeweiligen Kanals (7).

## Beschreibung

Die vorliegende Erfindung betrifft eine Installationsdose für die Elektroinstallation nach dem Oberbegriff des Anspruchs 1 sowie eine Haltevorrichtung nach dem Oberbegriff des Anspruchs 8.

Derartige Installationsdosen sind beispielsweise aus der DE 42 34 958 C2 bekannt. Die Installationsdosen werden als sogenannte Hohlwanddosen verwendet. Dabei geht es um eine Konstruktion, bei der eine Wand in Ständerbauweise erstellt wird, wobei diese Wand in Ständerbauweise anschließend beidseitig mit flächigen Beplankungen versehen wird. Zur Durchführung der Elektroinstallation werden in diese Beplankungen Öffnungen eingebracht, deren Form und Größe den Außenabmessungen von zu installierendem Installationsmaterial entspricht. Es handelt sich dabei häufig um Installationsdose mit dem standardisierten Durchmesser von 68 mm für den Einbau von Lichtschaltern bzw. Steckdosen oder anderen elektronischen Steuergeräten.

Die Installationsdosen weisen eine Öffnung mit einem Öffnungsrand auf. Die Öffnung dient dazu, nach der Montage der Installationsdose die entsprechenden Bauteile (Lichtschalter, Steckdosen, elektronische Steuergeräte) in die Installationsdose einsetzen zu können.

Damit die Installationsdosen nicht durch die Öffnung in der Beplankung durchrutschen in den Bereich zwischen den Beplankungen der Wand in Ständerbauweise, weisen die Installationsdosen meist einen den Öffnungsrand umgebenden Anlageflansch auf.

Weiterhin weist die Installationsdose eine Seitenwandkonstruktion auf, die aus einer oder mehreren Seitenwänden besteht. Die Seitenwandkonstruktion kann mit einer ihrer Kanten an dem Öffnungsrand anliegen und sich von dem Öffnungsrand weg erstrecken.

Begrifflich umfasst die "Seitenwandkonstruktion" eine Installationsdose, deren Grundform zylindrisch ist. Die Seitenwandkonstruktion weist dann lediglich eine Seitenwand auf, die die Zylindermantelfläche bildet. Es gibt auch Installationsdosen, die einen im Wesentlichen rechteckigen oder quadratischen Querschnitt aufweisen. "Im Wesentlichen" bedeutet in diesem Zusammenhang, dass die Ecken der Querschnittsfläche abgerundet sein können. Derartige Installationsdosen weisen dann vier Seitenwände auf, die aneinander angrenzen. Diese Ausführungsformen der Installationsdosen sind mit dem einheitlichen Begriff der "Seitenwandkonstruktion" umfasst.

Außerdem weisen die Installationsdosen einen Bodenbereich auf. Der Bodenbereich erstreckt sich beispielsweise an der dem Öffnungsrand gegenüberliegenden Kante der Seitenwandkonstruktion und schließt die Installationsdose an der der Öffnung der Installationsdose gegenüberliegenden Seite ab.

Die bekannten Installationsdosen weisen wenigstens zwei sich in der Seitenwandkonstruktion erstreckende Kanäle auf. Diese Kanäle sind zur Außenseite der Installationsdose offen. Die Kanäle schließen mit ihrer Öffnung flächenbündig mit der Außenseite der Installationsdose ab. Die Kanäle weisen im Übrigen zur Installationsdose hin geschlossene Wände auf.

Die Installationsdose weist außerdem eine Schraubenanordnung auf. Diese Schraubenanordnung weist Schrauben auf, die in Längsrichtung der Kanäle geführt sind. Außerdem sind in der Schraubenanordnung den Schrauben Muttern zugeordnet. Diese Muttern sind in den Kanälen verdrehsicher geführt.

Dadurch werden die Muttern bei einem Drehen der Schrauben in den Kanälen - abhängig von der Drehrichtung der Schrauben - in Richtung des Öffnungsflansches gezogen oder von diesem Öffnungsflansch weggedrückt.

Die Installationsdose weist außerdem der Schraubenanordnung zugeordnete Halteelemente auf, wobei jedes Halteelement ein erstes, mit der Schraube in Eingriff stehendes Ende und ein gegenüberliegendes freies Ende aufweist. Vorzugsweise sind die Halteelemente in einer ersten Stellung dieser Halteelemente derart in den Kanälen gelagert, dass diese nicht über die Oberkante der offenen Seite der Kanäle hinausstehen. Die Halteelemente sind aus der ersten Stellung heraus in eine Montagestellung überführbar, in der die Halteelemente, insbesondere deren freie Enden, aus den Kanälen heraus überstehen. Der Übergang von der ersten Stellung der Haltelemente in die Montagestellung der Halteelemente erfolgt, indem durch ein Drehen der Schrauben der Schraubenanordnung die diesen Schrauben zugeordneten Muttern in den Kanälen in Längsrichtung der Kanäle bewegt werden.

Durch diese Bewegung der Muttern in den Kanälen können die Halteelemente um eine Drehachse gedreht bzw. geschwenkt werden. Diese Drehachse befindet sich beispielsweise an dem einen Ende des Halteelementes, das mit der Schraube in Eingriff steht. Die Drehachse kann dabei senkrecht zur Längsachse der jeweiligen Schraube orientiert sein. Die Drehachse schneidet dabei beispielsweise die offene Seite des jeweiligen Kanals nicht. In Längsrichtung des Kanals ist die Position des Endes des Halteelementes, an dem sich die Drehachse befindet, beispielsweise abhängig von der Position der Mutter in dem Kanal.

Der vorliegenden Erfindung liegt die Aufgabe zugrunde, eine Installationsdose vorzuschlagen, deren Einsatzmöglichkeiten auch bei anderen bauseitigen Bedingungen erweitert sind.

Diese Ausgabe wird nach der vorliegenden Erfindung gemäß Anspruch 1 bzw. Anspruch 3 gelöst durch eine Ausgestaltung der Installationsdose, bei der der Übergang der Halteelemente aus der ersten Stellung in die Montagestellung weiterhin derart erfolgt, dass der Drehwinkel des Halteelementes über den gesamten Weg der Bewegung der Mutter in dem Kanal kontinuierlich abhängig ist von der Position der Mutter in der Längsrichtung des jeweiligen Kanals. Erfindungsgemäß kann dies dadurch erreicht werden, dass in dem Kanal ferner eine Gleitfläche vorgesehen ist, an der das Halteelement anliegt, wobei die Gleitfläche zur Längsachse der Schraube derart schräg verläuft, dass das freie Ende des Halteelements durch eine axiale Bewegung der Mutter in Richtung zu dem Anlageflansch kontinuierlich aus einer in dem Kanal liegenden Position, d.h. der ersten Stellung, in eine radial aus dem Kanal herausstehende Position, d.h. die Montagestellung, überführbar ist. Dabei kann nach einer bevorzugten Ausführungsform das Halteelement eine zur Längsachse der Schraube schräg verlaufende Gegengleitkante aufweisen, mit der das das Halteelement an der Gleitfläche anliegt.

Das Halteelement erstreckt sich in seiner ersten Stellung in dem Kanal ausgehend von dem Ende des Halteelementes, an dem sich die Drehachse befindet, in Längsrichtung des Kanals zum Öffnungsflansch der Installationsdose hin. Dabei weist das Halteelement an seinem freien Ende, d.h. der Seite, die der Seite gegenüberliegt, an der sich die Drehachse befindet, eine Schneidkante und/oder eine oder mehrere Schneidspitzen auf.

Damit ergibt sich bei der Installationsdose nach der vorliegenden Erfindung als Vorteil gegenüber dem Stand der Technik, dass die Installationsdose auch bei bauseitigen Bedingungen verwendbar ist, bei denen die Wand aus einer Holzkonstruktion besteht, die unmittelbar neben der Öffnung für die Installationsdose sich in den Innenbereich der Wand hinein bis zu einer Tiefe von einigen Zentimetern erstreckt.

Gängige Installationsdosen werden befestigt, indem nach dem Einsetzen der Installationsdose in die Öffnung der Wand Spreizelemente ausklappen, die über den äußeren Umfang der Installationsdose hinausstehen. Diese Spreizelemente werden dann im Weiteren durch ein Drehen der Schrauben entlang der Kanäle nach vorne in Richtung des Öffnungsflansches der Installationsdose gezogen. Wenn diese Spreizelemente auf der "Rückseite" der Beplankung anliegen, wird die Installationsdose montiert, indem die Installationsdose durch das Zusammenwirken des Öffnungsflansches auf der "Vorderseite" der Beplankung mit den auf der Rückseite anliegenden Spreizelemente gehalten wird. Diese Halterung steht unter einer gewissen mechanischen Spannung, weil die Spreizelemente durch die Schrauben mit einer ausreichenden Kraft nach vorne gezogen werden können.

Unter den beschriebenen bauseitigen Bedingungen, beispielsweise bei denen die Wand aus einer Holzkonstruktion besteht, kann es passieren, dass die Installationsdose nicht tief genug hinter der Beplankung in den Hohlraum hineinragt. Das führt dazu, dass das Spreizelement nicht ausklappen kann. Eine Befestigung der herkömmlichen Installationsdose ist damit unter den beschriebenen bauseitigen Bedingungen nicht durchführbar.

Für diesen Fall wirken die Eigenschaften der vorgeschlagenen Installationsdose vorteilhaft so zusammen, dass die Installationsdose auch unter den beschriebenen bauseitigen Bedingungen befestigt werden kann.

Dies erfolgt, indem das Halteelement kontinuierlich mit zunehmendem Drehwinkel der Dreh- bzw. Schwenkbewegung ausklappt, während es durch die Drehung der Schraube und die damit verbundene Bewegung der Mutter in dem Kanal mit seinem Ende in Richtung des Öffnungsflansches gezogen wird. Dabei erweist es sich als vorteilhaft, dass das Halteelement an dem freien Ende, das dem Öffnungsflansch der Installationsdose näher ist als das Ende, an dem sich die Drehachse befindet, die Schneidkante und/oder eine oder mehrere Schneidspitzen aufweist. Dadurch kann sich das Halteelement (mit der Schneidkante bzw. den Schneidspitzen voraus) in das Holz hineinschieben. Diese Bewegung wird weiter unterstützt, indem das andere Ende des Halteelementes bei einem Weiterdrehen der Schraube weiter nach vorne gezogen wird. Dabei vergrößert sich der Dreh- bzw. Schwenkwinkel des Halteelementes, so dass das freie Ende weiter von dem Kanal nach außen abgespreizt wird.

Dadurch wird insgesamt erreicht, dass das Halteelement ausreichend sicher und mit ausreichend großer Kraft in das Holz eindringt, um damit die Installationsdose sicher zu befestigen.

Insbesondere kommt es beim Drehen der Schraube auch zu der gewünschten Wechselwirkung, dass bei einem Weiterdrehen der Schraube die Kräfte, die von dem Halteelement über die Mutter und die Schraube auf die Installationsdose übertragen werden, wieder mit der Anliegekraft des Öffnungsflansches derart zusammenwirken, dass die Installationsdose sicher befestigt wird.

Um ein versehentliches Herausklappen des Halteelementes aus dem Kanal zu vermeiden (und damit auch eine gewisse Verletzungsgefahr bei der Handhabung der Installationsdose wegen der Schneidkante bzw. der Schneidspitzen) können die Halteelemente so geformt sein, dass diese mechanische gespannt zwischen den Seitenwänden des Kanals gehalten werden, bis das Halteelement durch die Drehung der Schraube und die Bewegung der Mutter in Längsrichtung des Kanals aus dem Kanal herausgedreht wird.

Bei der Ausgestaltung nach Anspruch 4 ist in dem Kanal eine Gleitfläche oder eine Gleitkante angeordnet, die mit einer Gegengleitfläche oder Gegengleitkante des Halteelementes zusammenwirkt. Dadurch wird das Halteelement bei einer Bewegung in Längsrichtung des Kanals zum Öffnungsflansch hin aus dem Kanal herausgedreht.

Die Gleitfläche bzw. Gleitkante sowie die Gegengleitfläche bzw. Gegengleitkante können in der Art zweier aufeinander entlang gleitender Keile zusammenwirken.

Die Gleitfläche oder Gleitkante kann durch ein metallisches Bauteil realisiert sein, das, ebenfalls durch die Schraube geführt, in dem Kanal angeordnet wird. Dabei ist es vorteilhaft möglich, eine "einheitliche" Installationsdose für die Hohlwandinstallation in großer Stückzahl herzustellen. Wenn die besonderen bauseitigen Gegebenheiten es erfordern, kann die Installationsdose entsprechend der vorliegenden Erfindung ausgestattet werden, indem die entsprechenden Bauteile (Gleitfläche bzw. Gleitkante; Halteelement) eingesetzt werden. Im Übrigen kann die Installationsdose mit den herkömmlichen Spreizelementen verwendet werden, wenn die Befestigung durch ein Klemmen an der Rückseite der Beplankung der Hohlwand erfolgen soll.

Es ist ebenso möglich, die Gleitfläche bzw. Gleitkante in die Spritzgussform für die Installationsdose zu integrieren, so dass die Gleitfläche bzw. Gleitkante bei der Herstellung der Installationsdose aus dem Kunststoff bereits mit "angelegt" ist. Damit kann die Ausbildung der Gleitfläche bzw. Gleitkante aus einem separaten metallischen Bauteil entfallen. Allerdings wird dann eine separate Spitzgussform für die Installationsdose nach der vorliegenden Erfindung benötigt.

Bei der Ausgestaltung nach Anspruch 5 ist zu der Bewegung der Mutter in Längsrichtung des Kanals ein Endanschlag angeordnet.

Dies erweist sich insofern als vorteilhaft, als durch die Begrenzung der Bewegung der Mutter auch der Drehwinkel des Halteelementes begrenz wird.

Vorteilhaft ist dieser Endanschlag an der Gleitfläche oder der Gleitkante angebracht.

Bei der Ausgestaltung nach Anspruch 6 ist das Halteelement mit der Mutter drehbeweglich und im Übrigen fest verbunden.

Dies erweist sich insofern als vorteilhaft, weil damit das Halteelement nicht nur durch die Mutter geführt ist, wenn die Mutter durch die Drehung der Schraube in Richtung des Öffnungsflansches der Installationsdose gezogen wird. Wenn eine Installationsdose nochmals ausgebaut werden soll, kann mit dieser Ausgestaltung durch ein Drehen der Schraube die Mutter von dem Öffnungsflansch der Installationsdose weggedrückt werden. Wenn das Halteelement drehbeweglich, aber fest mit der Mutter verbunden ist, wird das Halteelement mit dem Ende, an dem sich die Drehachse befindet, ebenfalls von dem Öffnungsflansch wegbewegt. Durch die bauseitigen Bedingungen, dass die Installationsdose bis zu einer größeren Tiefe direkt an einer begrenzenden Wand anliegt, wird das Halteelement bei dieser Bewegung wieder in den Kanal hineingedrückt. Wenn die vollständig erfolgt ist, kann die Installationsdose wieder entnommen werden.

Bei der Ausgestaltung nach Anspruch 7 ist das Halteelement ein separates Bauteil, das eine Durchgangsöffnung für die Schraube sowie eine Anlagefläche oder eine Anlagekante für die Mutter aufweist.

Diese Ausgestaltung erweist sich insofern als vorteilhaft, weil das Halteelement damit einfach als Stanzteil herstellbar ist, das nach dem Stanzen noch entlang einer oder ggf. dreier Kanten abgekantet werden muss.

Die Befestigung der Installationsdose ist mit diesem Halteelement genauso möglich wie mit dem Halteelement bei der Ausgestaltung nach Anspruch 6. Wenn die Installationsdose nochmals demontiert werden soll, ergibt sich ein Unterschied. Bei einem Drehen der Schraube in der Richtung, dass die Mutter von dem Öffnungsflansch weggedrückt wird, bleibt das Halteelement in der Wand stecken, weil die Mutter das Halteelement nur in der Bewegungsrichtung zum Öffnungsflansch hin vor sich herschieben kann, nicht jedoch in der Bewegungsrichtung vom Öffnungsflansch mit wegziehen kann.

Zum Herausnehmen der Installationsdose muss in diesem Fall die Schraube so weit gedreht werden, dass das Gewinde der Mutter nicht mehr mit dem Gewinde der Schraube zusammenwirkt. Dazu muss der Kanal, in dem die Schraube verdrehsicher geführt ist, länger sein als die Länge der Schraube. Die Installationsdose kann dann herausgezogen werden. Die Mutter fällt aus dem Kanal heraus. Das Halteelement bleibt in der Seitenwand stecken. Das Ende des Halteelementes in dem Kanal der Installationsdose gleitet beim Herausziehen der Installationsdose in Richtung des Bodenbereichs der Installationsdose aus dem Kanal heraus. Wenn die Installationsdose herausgenommen wurde, kann mit einem geeigneten Werkzeug durch die Öffnung in der Wand auch das Halteelement aus dem Holz herausgezogen werden.

Bei dieser Ausgestaltung spielt es keine Rolle, wenn sich das Halteelement beim Eindringen in das Holz eventuell so verformt hat, dass es nicht mehr in den Kanal passt.

Anspruch 8 betrifft eine Haltevorrichtung. Diese Haltevorrichtung ist als separates Bauteil verkehrsfähig. Wie bereits beschrieben, lässt sich eine "herkömmliche Hohlwanddose" durch einen entsprechenden Einsatz für den Kanal in der Seitenwand der Hohlwanddose umrüsten zu einer Installationsdose nach Anspruch 1 bzw. Anspruch 3. Die Haltevorrichtung nach Anspruch 8 ist das Bauteil, das für diese Umrüstung benötigt wird.

Diese Haltevorrichtung weist eine Schraube auf sowie eine mit der Schraube korrespondierende Mutter entlang der Schraube ist zwischen der Mutter und dem Kopf der Schraube ein Halteelement angeordnet. Das Halteelement ist um eine Dreh- bzw. Schwenkachse drehbar gelagert, die senkrecht zur Längsrichtung der Schraube orientiert ist. Diese Drehachse befindet sich an dem einen Ende des Halteelementes. Zwischen dem Kopf der Schraube und dem Halteelement ist ein Element angeordnet. Dieses Element weist eine Gleitfläche oder Gleitkante auf, die mit einer Gegengleitfläche oder Gegengleitkante des Halteelementes derart zusammenwirkt, dass das Halteelement bei einer Bewegung der Mutter in Längsrichtung der Schraube in der Richtung zum Schraubenkopf hin um die Drehachse gedreht wird. In Längsrichtung der Schraube ist die Position des Endes des Halteelementes, an dem sich die Drehachse befindet, abhängig von der Position der Mutter in Längsrichtung der Schraube. Der Drehwinkel des Halteelementes ist über den gesamten Weg der Bewegung der Mutter entlang der Längsrichtung der Schraube kontinuierlich abhängig von der Position der Mutter entlang der Längsrichtung der Schraube. Das Halteelement erstreckt sich entlang der Längsrichtung der Schraube ausgehend von dem Ende des Halteelementes, an dem sich die Drehachse befindet, in Längsrichtung der Schraube zum Schraubenkopf hin. Das Halteelement weist an seinem freien Ende, d.h. der Seite, die der Seite gegenüberliegt, an der sich die Drehachse befindet, eine Schneidkante und/oder eine oder mehrere Schneidspitzen auf.

Diese Haltevorrichtung eignet sich als separater Einsatz in den Kanal einer Hohlwandinstallationsdose, um diese für die im Zusammenhang mit dieser Anmeldung beschriebenen bauseitigen Bedingungen umzurüsten.

Ein Ausführungsbeispiel der Erfindung ist in der Zeichnung dargestellt. Es zeigt dabei:
- Fig. 1:: eine Perspektivansicht auf einen Teilausschnitt einer Installationsdose,
- Fig. 2:: eine Perspektivansicht auf den Teilausschnitt der Installationsdose nach Figur 1 in einer anderen Position der Mutter in dem Kanal,
- Fig. 3:: eine andere Perspektive des Teilausschnitts der Installationsode nach Figur 2,
- Fig. 4:: eine Ansicht der Schraube, der Mutter mit dem daran befestigten Halteelement und dem die Gleitkanten bildenden Element und
- Fig. 5:: eine Prinzipdarstellung einer alternativen Gestaltung für das Halteelement.

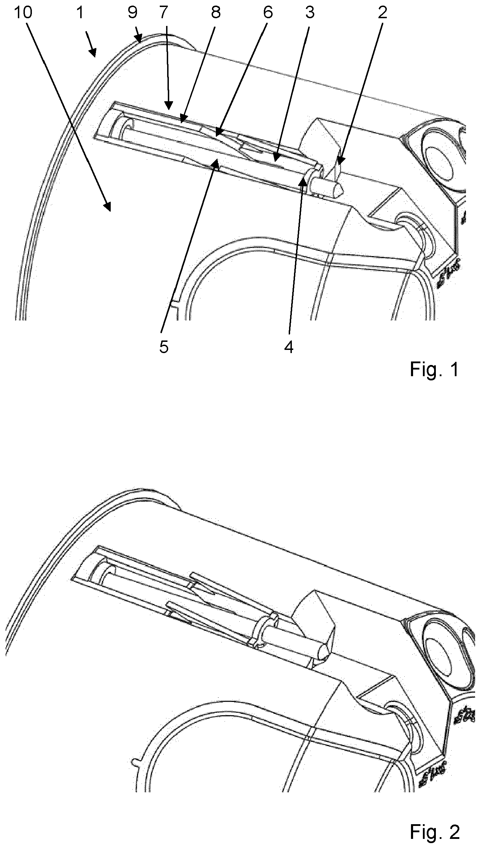

Figur 1 zeigt eine Perspektivansicht auf einen Teilausschnitt einer Installationsdose 1. die Installationsdose 1 weist einen Öffnungsflansch 9 auf, der die Öffnung der Installationsdose umgibt. Außerdem ist die Seitenwand 10 der - in diesem Beispiel - zylindrisch geformten Installationsdose zu sehen.

Es ist der Kanal 7 zu sehen, entlang dem durch eine Drehung der Schraube 5 die Mutter 4 in Längsrichtung des Kanals bewegbar ist.

Die Mutter 4 ist verdrehsicher in dem Kanal 7 geführt.

In der Darstellung der Figur 1 ist zu sehen, dass ein Element 8 vorhanden ist, das zwei Gleitflächen 6 aufweist. Diese beiden Gleitflächen 6 liegen im eingebauten Zustand des Elements 8 an den beiden Seitenflächen des Kanals 7.

Es ist weiterhin ein Halteelement 3 zu sehen, das drehbeweglich aber im Übrigen fest mit der Mutter 4 verbunden ist.

In der Darstellung der Figur 1 sind das Element 8 sowie die Einheit aus dem Halteelement 3 und der damit verbundenen Mutter 4 aus dem Kanal 7 herausnehmbar, indem die Schraube 5 entsprechend weit gedreht wird.

Es ist zu sehen, dass die Außenfläche der Installationsdose 1 eine an sich bekannte Auflagefläche 2 ausweist für ein Spreizelement, das in dieser Funktion üblicherweise bei Installationsdosen für die Einbausituation der Hohlwandbauweise verwendet wird. Diese Spreizelemente weisen ein Innengewinde auf und werden als Mutter auf die Schraube 5 der Installationsdose geschraubt. Beim Einsetzen der Installationsdose 1 sind diese Spreizelemente seitlich weggedreht, so dass diese Spreizelemente auf der Auflagefläche 2 aufliegen. Damit stehen diese Spreizelemente nicht über die Außenfläche der Installationsdose hervor. Nach dem Einsetzen der Installationsdose werden die Schrauben 5 angezogen. Dadurch werden die Spreizelemente herausgeklappt und bei der weiteren Drehung der Schraube 5 entlang des Kanals 7 in Richtung des Öffnungsflansches 9 der Installationsdose 1 gezogen. Dazu weisen die Spreizelemente eine solche Form auf, dass sie verdrehsicher in dem Kanal 7 geführt werden.

Die dargestellte Installationsdose 1 ist damit einfach umrüstbar von einer herkömmlichen Installationsdose für die Hohlwandinstallation zu einer Installationsdose, die Verwendung finden kann, wenn die Öffnung zum Einsetzen der Installationsdose unmittelbar von einer Begrenzung aus Holz umgeben ist.

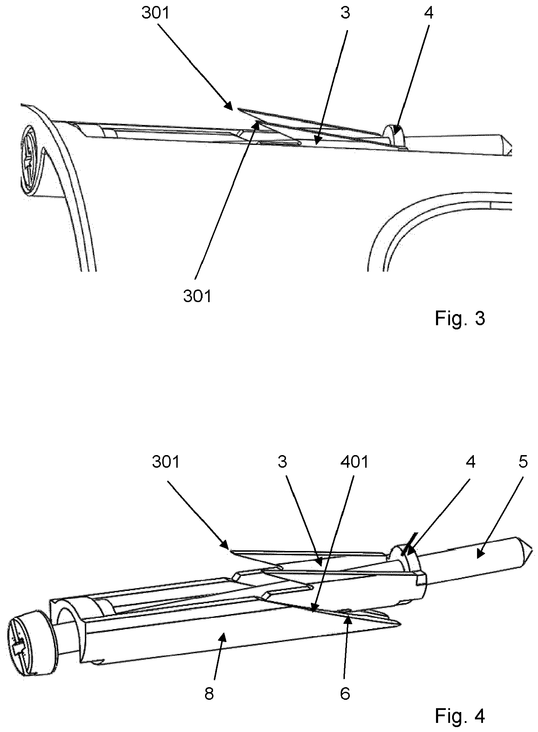

Figur 2 zeigt eine Perspektivansicht auf den Teilausschnitt der Installationsdose nach Figur 1 in einer anderen Position der Mutter 4 in dem Kanal 7. Das bedeutet, dass die Schraube 5 entsprechend gedreht wird, so dass die Mutter 4 in Richtung des Öffnungsflansches 9 gezogen wurde. Wie im Zusammenhang mit Figur 4 noch erläutert wird, wird dabei gleichzeitig das Halteelement 3 nach außen gedreht bzw. geschwenkt um eine Drehachse, die sich an dem Ende des Halteelementes 3 befindet, an dem Halteelement 3 an der Mutter 4 befestigt ist.

Figur 3 zeigt eine andere Perspektive des Teilausschnitts der Installationsode nach Figur 2. Es ist zu sehen, dass insbesondere die beiden Schneidspitzen 301 aus dem Kanal 7 hervorragen - und zwar in der Weise, dass das Halteelement 3 mittels dieser Schneidspitzen 301 bei einer Bewegung in Richtung des Öffnungsflansches 9 bei gleichzeitig weiterer Drehung des Halteelementes 3 in das Holz hineingeschoben wird und damit die Installationsdose sicher hält.

Figur 4 zeigt eine Ansicht der Schraube 5, der Mutter 4 mit dem daran befestigten Halteelement 3 und dem die Gleitkanten 6 bildenden Element 8.

In dieser Darstellung sind die Gegengleitkanten 401 an dem Halteelement 3 gut zu sehen. Diese Gegengleitkanten 401 bewirken zusammen mit der Gleitkante 6 des Elementes 8, dass das Halteelement 3 bei einer Bewegung der Mutter 4 in Richtung des Öffnungsflansches 9 der Installationsdose 1 kontinuierlich weiter nach außen aus dem Kanal 7 herausgedreht wird, bei gleichzeitiger Bewegung in Richtung des Öffnungsflansches 9.

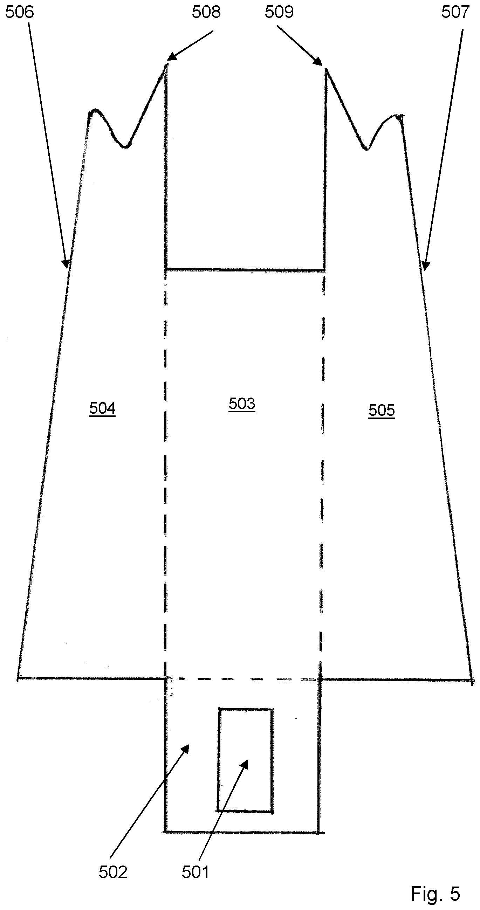

Figur 5 zeigt eine Prinzipdarstellung einer alternativen Gestaltung für das Halteelement 3. Es handelt sich hierbei um ein Stanzteil, das entlang der durchgezogenen Linien gestanzt wird. Nach dem Stanzen erfolgt ein Kantvorgang entlang der strichlinierten Linien der Figur 5 und zwar derart, dass die äußeren Flächen 502, 504, 505 dabei jeweils um 90 Grad nach oben gekantet werden.

Das Halteelement 3 wird so in den Kanal eingesetzt, dass die offene Seite zur Unterseite des Kanals zeigt. Die Schraube 5 wird durch die Öffnung 501 geführt. Diese Öffnung 501 ist als Langloch ausgeführt, so dass das Halteelement 3 drehbar bleibt, auch wenn die Schraube 5 durch die Öffnung 501 geführt ist.

Das Flächenteil 502 des Halteelementes befindet sich in dem Kanal, und zwar senkrecht zur Längsrichtung des Kanals. Die Mutter 4 liegt an der Unterseite des Flächenteils 502 an, so dass das Halteelement 3 bei einer Bewegung der Mutter 4 in Richtung des Öffnungsflansches 9 über das Flächenteil 502 ebenfalls in Richtung des Öffnungsflansches geschoben wird.

Das Flächenteil 503 erstreckt sich in Richtung der offenen Seite des Kanals, die beiden Flächenteile 504 und 505 an den beiden Seitenwänden des Kanals. Diese beiden Flächenteile 504 und 505 weisen jeweils eine Gegengleitfläche 506 und 507 auf, die mit einer Gleitfläche in dem Kanal zusammenwirkt. Diese Gleitfläche kann wiederum durch das separate Element 8 gebildet werden.

Es ist zu sehen, dass das Halteelement der Darstellung der Figur 5 ebenfalls zwei Schneidspitzen 508 und 509 aufweist.

Vorteilhaft kann das Halteelement der Darstellung der Figur 5 einfach als Stanzteil hergestellt werden, bei dem anschließend ein Abkantvorgang durchgeführt wird. Ergänzend muss eine Mutter 4 vorgesehen werden, die verdrehsicher in dem Kanal geführt ist. Die Gleitfläche kann durch ein separates Element 8 realisiert werden oder auch durch eine Ausgestaltung der Spritzform der Installationsdose, so dass die Gleitfläche direkt in Kunststoff hergestellt wird.

## Patentansprüche

1. Installationsdose (1) für die Elektroinstallation mit einer Seitenwandkonstruktion (10) mit einem Anlageflansch (9) und einem an der Seitenwandkonstruktion (10) anschließenden Bodenbereich, wobei in der Seitenwandkonstruktion (10) wenigstens ein zur Installationsdose (1) hin geschlossener und nach radial außen durch einen länglichen Schlitz geöffneter Kanal (7) vorgesehen ist, wobei in dem Kanal (7) eine Schraube (5) drehbar gelagert ist, die eine Längsachse definiert, wobei in dem Kanal (7) eine mit der Schraube in Gewindeeingriff stehende Mutter (4) verdrehsicher und axial bewegbar geführt ist, und wobei der Schraube (5) ein Halteelement (3) zugeordnet ist, das ein erstes, mit der Schraube (5) in Eingriff stehendes Ende und ein gegenüberliegendes freies Ende aufweist,
**dadurch gekennzeichnet, dass** in dem Kanal (7) ferner eine Gleitfläche (6) vorgesehen ist, an der das Halteelement (3) anliegt, wobei die Gleitfläche (6) zur Längsachse der Schraube (5) derart schräg verläuft, dass das freie Ende des Halteelements (3) durch eine axiale Bewegung der Mutter (4) in Richtung zu dem Anlageflansch (9) kontinuierlich aus einer in dem Kanal (7) liegenden Position in eine radial aus dem Kanal (7) herausstehende Position überführbar ist,
und dass das Halteelement (3) an seinem freien Ende eine Schneidkante und/oder eine oder mehrere Schneidspitzen (301; 508, 509) aufweist.

2. Installationsdose (1) nach Anspruch 1, **dadurch gekennzeichnet, dass** das Halteelement (3) eine zur Längsachse der Schraube (5) schräg verlaufende Gegengleitkante (401) aufweist, mit der das das Halteelement (3) an der Gleitfläche (6) anliegt.

3. Installationsdose (1) für die Elektroinstallation, insbesondere nach Anspruch 1 oder 2,
➢ wobei die Installationsdose (1) eine Öffnung mit einem Öffnungsrand aufweist,
➢ wobei die Installationsdose (1) einen den Öffnungsrand umgebenden Anlageflansch (9) aufweist,
➢ wobei die Installationsdose (1) eine Seitenwandkonstruktion (10) aufweist, die aus einer oder mehreren Seitenwänden besteht,
➢ wobei die Seitenwandkonstruktion (10) mit einer ihrer Kanten an dem Öffnungsrand anliegt und
➢ wobei die Seitenwandkonstruktion (10) sich von dem Öffnungsrand weg erstreckt,
➢ wobei die Installationsdose (1) einen Bodenbereich aufweist,
➢ der sich an der dem Öffnungsrand gegenüberliegenden Kante der Seitenwandkonstruktion (10) anschließt und die Installationsdose an der Öffnung gegenüberliegenden Seite abschließt,
➢ wobei die Installationsdose (1) wenigstens zwei sich in der Seitenwandkonstruktion erstreckende Kanäle (7) aufweist,
➢ wobei die Kanäle (7) zur Außenseite der Installationsdose (1) offen sind,
➢ wobei die Kanäle (7) mit der Öffnung flächenbündig mit der Außenseite der Installationsdose (1) abschließen,
➢ wobei die Kanäle (7) im Übrigen zur Installationsdose (1) hin geschlossene Wände aufweisen,
➢ wobei die Installationsdose (1) eine Schraubenanordnung (4, 5) aufweist,
➢ wobei die Schraubenanordnung Schrauben (5) aufweist, die in Längsrichtung der Kanäle (7) geführt sind,
➢ wobei die Schraubenanordnung den Schrauben (5) zugeordnete Muttern (4) aufweist,
➢ wobei die Muttern (4) in den Kanälen (7) verdrehsicher geführt sind,
➢ wobei die Installationsdose (1) der Schraubenanordnung (4, 5) zugeordnete Halteelemente (3) aufweist,
➢ wobei die Halteelemente (3) in einer ersten Stellung derart in den Kanälen (7) gelagert sind, dass diese nicht über die Oberkante der offenen Seite der Kanäle (7) hinausstehen,
➢ wobei die Halteelemente (3) aus der ersten Stellung heraus in eine Montagestellung überführbar sind, in der die Halteelemente (3) aus den Kanälen (7) heraus überstehen,
➢ wobei der Übergang von der ersten Stellung in die Montagestellung erfolgt, indem durch ein Drehen der Schrauben (5) der Schraubenanordnung die diesen Schrauben (5) zugeordneten Muttern (4) in den Kanälen (7) in Längsrichtung der Kanäle (7) bewegt werden,
➢ wobei durch diese Bewegung der Muttern (4) in den Kanälen (7) die Halteelemente (3) um eine Drehachse gedreht werden,
➢ wobei sich die Drehachse an dem einen Ende des Halteelementes (3) befindet,
➢ wobei die Drehachse senkrecht orientiert ist zur Längsachse der jeweiligen Schraube (5),
➢ wobei die Drehachse die offene Seite des jeweiligen Kanals (7) nicht schneidet,
➢ wobei in Längsrichtung des Kanals (7) die Position des Endes des Halteelementes (3), an dem sich die Drehachse befindet, abhängig ist von der Position der Mutter (4) in dem Kanal (7),
**dadurch gekennzeichnet**,
➢ dass der Übergang der Halteelemente (3) aus der ersten Stellung in die Montagestellung weiterhin derart erfolgt,
➢ dass der Drehwinkel des Halteelementes (3) über den gesamten Weg der Bewegung der Mutter (4) in dem Kanal (7) kontinuierlich abhängig ist von der Position der Mutter (4) in der Längsrichtung des jeweiligen Kanals (7),
➢ dass sich das Halteelement (3) in dem Kanal (7) ausgehend von dem Ende des Halteelementes (3), an dem sich die Drehachse befindet, in Längsrichtung des Kanals (7) zum Öffnungsflansch (9) der Installationsdose (1) hin erstreckt und
➢ dass das Halteelement (3) an der Seite, die der Seite gegenüberliegt, an der sich die Drehachse befindet, eine Schneidkante und/oder eine oder mehrere Schneidspitzen (301; 508, 509) aufweist.

4. Installationsdose nach Anspruch 3,
**dadurch gekennzeichnet, dass** in dem Kanal (7) eine Gleitfläche oder Gleitkante (6) angeordnet ist, die mit einer Gegengleitfläche oder Gegengleitkante (401; 506, 507) des Halteelementes (3) derart zusammenwirkt, dass das Halteelement (3) bei einer Bewegung in Längsrichtung des Kanals (7) zum Öffnungsflansch (9) hin aus dem Kanal (7) herausgedreht wird.

5. Installationsdose nach Anspruch 3 oder 4,
**dadurch gekennzeichnet, dass** zu der Bewegung der Mutter (4) in Längsrichtung des Kanals (7) ein Endanschlag angeordnet ist.

6. Installationsdose nach einem der Ansprüche 3 bis 5
**dadurch gekennzeichnet, dass** das Halteelement (3) mit der Mutter (4) drehbeweglich und im Übrigen fest verbunden ist.

7. Installationsdose nach einem der Ansprüche 3 bis 5,
**dadurch gekennzeichnet, dass** das Halteelement (3) ein separates Bauteil ist, das eine Durchgangsöffnung (501) für die Schraube sowie eine Anlagefläche (502) oder eine Anlagekante für die Mutter (4) aufweist.

8. Haltevorrichtung,
➢ wobei die Haltevorrichtung eine Schraube (5) aufweist sowie eine mit der Schraube (5) korrespondierende Mutter (4),
➢ wobei entlang der Schraube (5) zwischen der Mutter (4) und dem Kopf der Schraube ein Halteelement (3) angeordnet ist,
**dadurch gekennzeichnet**,
➢ dass das Halteelement (3) um eine Drehachse drehbar gelagert ist, die senkrecht zur Längsrichtung der Schraube (5) orientiert ist,
➢ wobei sich die Drehachse an dem einen Ende des Halteelementes (3) befindet,
➢ dass zwischen dem Kopf der Schraube (5) und dem Halteelement (3) ein Element (8) angeordnet ist,
➢ wobei dieses Element (8) eine Gleitfläche oder Gleitkante (6) aufweist,
➢ wobei die Gleitfläche oder Gleitkante (6) des Elementes (8) mit einer Gegengleitfläche oder Gegengleitkante (401; 506, 507) des Halteelementes (3) derart zusammenwirkt, dass das Halteelement (3) bei einer Bewegung der Mutter (4) in Längsrichtung der Schraube (5) in der Richtung zum Schraubenkopf hin um die Drehachse gedreht wird,
➢ wobei in Längsrichtung der Schraube (5) die Position des Endes des Halteelementes (3), an dem sich die Drehachse befindet, abhängig ist von der Position der Mutter (4) in Längsrichtung der Schraube (5)
➢ dass der Drehwinkel des Halteelementes über den gesamten Weg der Bewegung der Mutter (4) entlang der Längsrichtung der Schraube (5) kontinuierlich abhängig ist von der Position der Mutter (4) entlang der Längsrichtung der Schraube (5),
➢ dass sich das Halteelement (3) entlang der Längsrichtung der Schraube (5) ausgehend von dem Ende des Halteelementes (3), an dem sich die Drehachse befindet, in Längsrichtung der Schraube (5) zum Schraubenkopf hin erstreckt und
➢ dass das Halteelement (3) an der Seite, die der Seite gegenüberliegt, an der sich die Drehachse befindet, eine Schneidkante und/oder eine oder mehrere Schneidspitzen (301; 508, 509) aufweist.
